# FASCICULE DE BREVET EUROPEEN

(11) **EP 2 196 712 B1**
(45) Date de publication et mention de la délivrance du brevet: **03.08.2011**
(21) Numéro de dépôt: 09290903.5
(22) Date de dépôt: 04.12.2009
(51) Int. Cl.: F16K 31/06

(54) **Electrovanne à vitesse de fermeture contrôlée**
Magnetventil mit gesteuerter Schliessgeschwindigkeit
Sonenoid valve with controlled closing speed

(30) Priorité: 09.12.2008 FR 0806883
(43) Date de publication de la demande: 16.06.2010
(73) Titulaire: Delabie, 80534 Friville (FR)
(72) Inventeur: Barge, Eric, 76470 Le Treport (FR)
(74) Mandataire: Hammond, William

(56) Documents cités:
- EP-A- 0 831 260
- EP-A- 1 965 111
- WO-A-01/07809
- DE-B3-102007 002 432

## Description

La présente invention concerne une électrovanne à vitesse de fermeture contrôlée pour équiper par exemple des robinets simples ou mitigeurs pour appareils sanitaires et dont le circuit de commande est alimenté par pile ou batterie, ainsi qu'un robinet la comportant.

On connaît déjà des robinets munis d'une électrovanne tels que ceux décrits dans les documents FR-2645.611-A, EP-831 260-A, WO-0107809-A et FR 2 827 659-A.

Le document FR-2645.611-A concerne un robinet mitigeur commandé à distance dont le corps est réalisé en deux parties, et comportant une électrovanne qui selon le dessin comporte une membrane.

Le document EP-831 260-A est relatif à un mitigeur comportant une électrovanne avec un circuit annexe de dérivation.

Le document WO-0107809-A concerne une électrovanne à débit proportionnel, qui doit être alimentée en courant tout le temps que le fluide s'écoule : ceci la rend impropre à être commandée par un circuit électronique à pile du fait d'une consommation en énergie trop importante.

Quant au document FR-2 827 659-A, il est relatif à une cartouche de robinet mitigeur à disques céramiques superposés et comportant une électrovanne, sans que la structure et le fonctionnement de cette électrovanne soient décrits plus avant.

Ces dispositifs de l'art antérieur présentent différents inconvénients auxquels la présente invention a notamment pour but d'obvier.

Ainsi, un des buts de la présente invention est-il de fournir une électrovanne qui permet une fermeture lente afin d'éviter les coups de bélier.

Un autre but est de fournir une telle électrovanne avec un filtre efficace du fluide en amont du clapet auxiliaire et avec un très faible volume d'eau en aval du clapet auxiliaire de manière à éviter la formation de biofilm et la prolifération bactériologique.

Un autre but est de fournir une telle électrovanne fonctionnant avec très peu d'énergie.

Un but supplémentaire de l'invention est de fournir une telle électrovanne qui peut être insérée très facilement à l'intérieur d'un corps de robinet tel que celui d'un robinet mitigeur pour lavabo, douche ou tout autre appareil sanitaire.

Ces buts, ainsi que d'autres qui apparaîtront par la suite, sont atteints par une électrovanne comprenant un corps dans lequel sont disposés deux compartiments séparés par une cloison, un compartiment inférieur et un compartiment supérieur, ce dernier comportant un alésage dans lequel est située une bobine, laquelle électrovanne est caractérisée, selon la présente invention, par le fait qu'elle comprend un pot de temporisation qui est rendu solidaire du compartiment inférieur par tout moyen convenable et qui comprend une chambre de temporisation dont la périphérie est munie d'au moins une rainure pour filtrer un fluide qui s'écoule en aval vers un canal auxiliaire ménagé dans la cloison, le débouché de ce canal auxiliaire dans le compartiment supérieur constituant le siège auxiliaire de cette électrovanne, la section de ce siège auxiliaire étant à peine supérieure à celle de la rainure, la chambre de temporisation contenant un piston qui est muni d'un joint racleur coopérant avec la rainure et qui porte le clapet principal de l'électrovanne.

De préférence, à l'intérieur du pot de temporisation est situé le siège principal de l'électrovanne disposée juste au-dessus du canal d'évacuation et des canaux radiaux qui permettent l'évacuation du fluide.

Avantageusement, le piston comprend un guide qui s'engage dans le canal d'évacuation.

De préférence, le siège auxiliaire débouche dans un logement qui reçoit avec un faible jeu le clapet auxiliaire porté par le noyau de la bobine de façon à rincer la partie avale de ce siège auxiliaire lors de chaque déplacement du piton.

La présente invention concerne également un robinet muni d'une électrovanne telle que décrit ci-dessus.

La description qui va suivre et qui ne présente aucun caractère limitatif, doit être lue en regard des figures en annexe, parmi lesquelles:

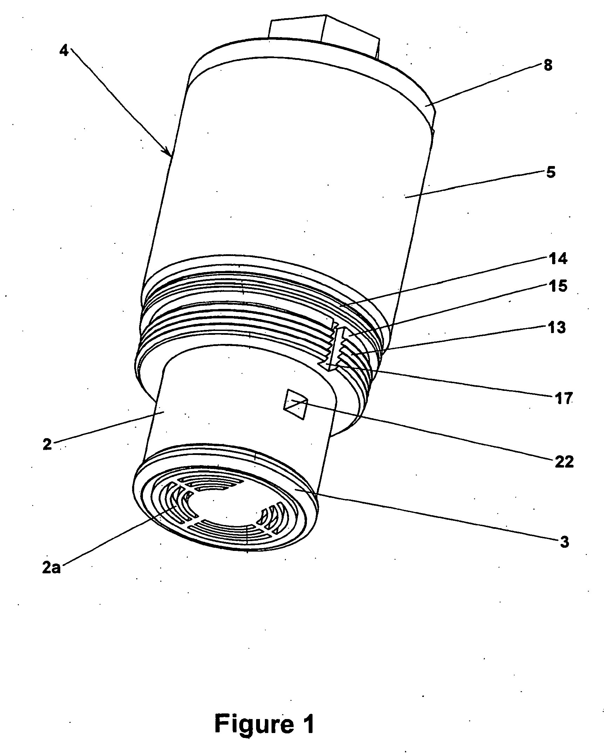

- la figure 1 représente une perspective d'une électrovanne selon la présente invention ; et,

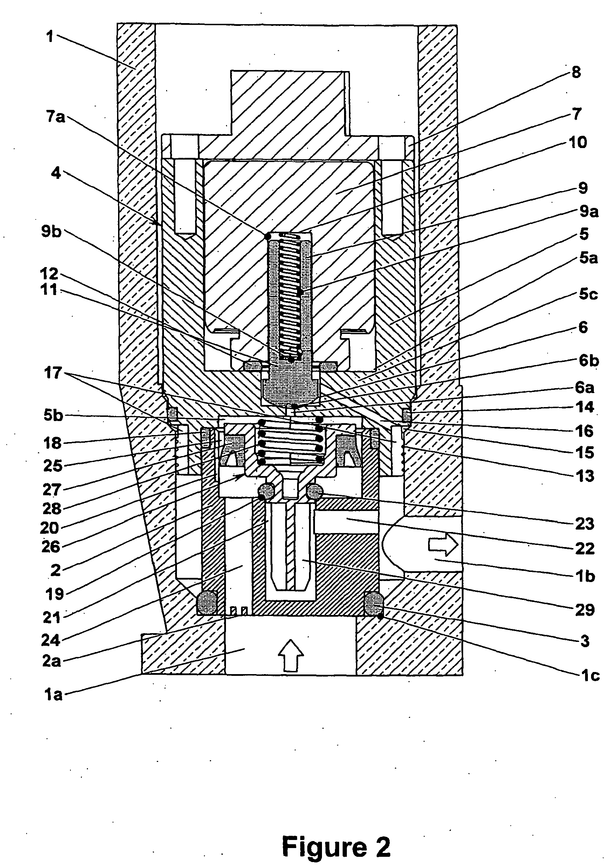

- la figure 2 est une vue en coupe verticale d'un robinet comportant une telle électrovanne.

Ainsi qu'on peut le voir sur ces figures, un robinet est constitué d'un corps 1 comportant une arrivée de fluide 1a et une sortie de fluide 1b.

Selon le présent exemple de réalisation, à l'extérieur du corps 1 du robinet est disposée une électrovanne 4 comprenant un pot de temporisation 2 qui repose sur un épaulement circulaire 1c formé à l'intérieur du corps 1 du robinet au niveau de l'arrivée de fluide 1a. De façon connue un joint 3 est disposé entre le pot de temporisation 2 et l'épaulement circulaire 1c afin d'assurer une étanchéité à ce niveau.

Cette électrovanne 4 comprend également un corps 5 de forme générale cylindrique dont une extrémité coopère avec le corps de robinet 1. Ce corps d'électrovanne est divisé en deux compartiments 5a et 5b séparés par une cloison 5c munie en son centre d'un logement 6 percé axialement d'un canal 6a.

Dans le compartiment supérieur 5a, est située une bobine 7 maintenue en position par un chapeau 8 fixé sur le corps de l'électrovanne 5 par tout moyen connu. Cette bobine 7 comporte un alésage 7a dans lequel est disposé avec un faible jeu latéral et vertical un noyau 9 muni d'un logement central 9a dans lequel est situé un ressort 10 : ce ressort 10 prend appui, d'une part, sur le fond 9b du logement central 9a et, d'autre part, sur la partie de la bobine 7 située au-dessus de ce logement central 9a.

L'extrémité du noyau 9 pénétrant dans le logement 6 avec un faible jeu porte un clapet auxiliaire 11 : celui-ci est maintenu au repos contre le siège auxiliaire 6b constitué par le débouché du canal 6a dans le logement 6.

Le faible jeu ménagé autour du noyau 9 et du clapet auxiliaire 11 permet un renouvellement de l'eau notamment dans le logement 6, lors de chaque ouverture du clapet auxiliaire 11.

Un joint 12 assure l'étanchéité entre la bobine 7 et le fond du compartiment 5a dans lequel celle-ci est disposée.

Le corps 5 de l'électrovanne comporte, selon le présent exemple de réalisation, un filetage 13 qui permet sa fixation dans le corps du robinet 1. De façon connue, un joint 14, situé dans une gorge au-dessus du filetage 13 permet d'assurer l'étanchéité entre le corps 5 de l'électrovanne et le corps de robinet 1.

Une gorge d'écoulement 15 est réalisée entre le filetage 13 et le joint d'étanchéité 14 ; et, un canal de décompression 16 relie le logement 6 à cette gorge d'écoulement 15 pour permettre l'écoulement du fluide vers l'aval lors de l'ouverture du clapet auxiliaire 11.

Par ailleurs, au moins une rainure d'écoulement 17 est réalisée dans le filetage 13 pour favoriser l'écoulement du fluide vers l'aval.

Dans le compartiment 5b, ou compartiment inférieur, du corps 5 de l'électrovanne s'encastre la partie supérieure du pot de temporisation 2, selon le présent exemple de réalisation. D'autres modes de réalisation peuvent être envisagés pour rendre solidaire le pot de temporisation 2 du corps 5 de l'électrovanne.

De façon connue, un joint d'étanchéité 18 est intercalé entre le pot de temporisation 2 et le compartiment 5b.

A l'intérieur du pot de temporisation 2 est situé le siège principal 19 de l'électrovanne disposé juste au-dessus du canal d'évacuation 21 et du ou des canaux radiaux 22 qui permettent l'évacuation du fluide vers la sortie 1 b.

Au moins un canal périphérique 24 est ménagé dans la partie inférieure du pot de temporisation 2 autour du canal d'évacuation 21 pour permettre le passage du fluide depuis l'arrivée d'eau 1 a jusqu'au clapet principal 19.

Selon le présent mode de réalisation de l'invention, le pot de temporisation 2 comporte un filtre 2b disposé à son extrémité reposant sur l'épaulement circulaire 1 c afin de protéger le clapet principal 23 coopérant avec le siège principal 19 contre d'éventuels corps étrangers qui seraient véhiculé par le fluide.

Le pot de temporisation 2 renferme dans sa chambre de temporisation 25 un piston 26 qui porte, d'une part, à sa périphérie un joint à lèvre 27 pour en freiner la descente et, d'autre part, le clapet principal 23 qui, en fin de course du piston 26, repose sur le siège principal 19.

De même, un ressort de rappel 28 est situé à la partie supérieure du piston 26 pour en faciliter le retour vers le siège principal 19 après la fermeture du clapet auxiliaire 11. Au moins une rainure de temporisation 20 est ménagée à la périphérie de la chambre de temporisation 25 de façon calibrée pour contrôler la vitesse de retour du piston 26 : ceci permet d'éviter une fermeture trop rapide du clapet principal 23 et donc de supprimer les éventuels coups de bélier.

L'utilisation de rainures de temporisation 20 en périphérie de la chambre de temporisation 25 permet d'avoir une filtration efficace du fluide qui passe par ces rainures pour aller au canal 6a et au siège auxiliaire 6b, dont la section est à peine supérieure à celle de la rainure 20 : ceci permet d'avoir une section du siège auxiliaire 6b très petite donnant un très faible effort sur le clapet auxiliaire dû à la pression du fluide ce qui autorise l'utilisation d'une bobine 7 consommant très peu de courant.

La disposition des rainures de temporisation 20 en périphérie de la chambre de temporisation permet d'avoir un effet autonettoyant de ces rainures par le mouvement du joint racleur 27 porté par le piston 26.

Ainsi, par rapport aux électrovannes connues et notamment à celle comportant une membrane, une électrovanne selon la présente invention permet d'avoir un volume d'eau beaucoup plus faible au dessus du siège auxiliaire 6b car le clapet auxiliaire 11 coulisse de façon ajustée dans le logement 6, et la course du piston 26 permet de renouveler efficacement l'eau dans le logement 6 à chaque ouverture du clapet auxiliaire 11 : ceci permet d'éviter le développement de biofilm, comme cela est fréquent dans la plupart des électrovannes, les rendant ainsi impropres à l'usage dans le milieu hospitalier.

## Revendications

1. - Electrovanne à vitesse de fermeture contrôlée comprenant un corps (5) dans lequel sont disposés deux compartiments séparés par une cloison (5c), un compartiment inférieur (5b) et un compartiment supérieur (5a), ce dernier comportant un alésage (7a) dans lequel est située une bobine (7), **caractérisée par le fait qu'**elle comprend un pot de temporisation (2) qui est rendu solidaire dudit compartiment inférieur (5b) par tout moyen convenable et qui comprend une chambre de temporisation (25) dont la périphérie est munie d'au moins une rainure (20) pour filtrer un fluide qui s'écoule en aval vers un canal auxiliaire (6a) ménagé dans ladite cloison (5c), le débouché dudit canal auxiliaire (6a) dans le compartiment supérieur (5a) constituant le siège auxiliaire (6b) de ladite électrovanne, la section dudit siège auxiliaire (6b) étant à peine supérieure à celle de ladite rainure (20), ladite chambre de temporisation (25) contenant un piston (26) qui est muni d'un joint racleur (27) coopérant avec ladite rainure (20) et qui porte le clapet principal (23) de ladite électrovanne.

2. - Electrovanne selon la revendication 1, **caractérisée par le fait qu'**à l'intérieur du pot de temporisation (2) est situé le siège principal (19) de ladite électrovanne disposée juste au-dessus du canal d'évacuation (21) et des canaux radiaux (22) qui permettent l'évacuation du fluide.

3. - Electrovanne selon la revendication 1 ou 2, **caractérisée par le fait que** le piston (26) comprend un guide (29) qui s'engage dans le canal d'évacuation (21).

4. - Electrovanne selon l'une quelconque des revendications 1 à 3, **caractérisée par**le fait que le siège auxiliaire (6b) débouche dans un logement (6) qui reçoit avec un faible jeu le clapet auxiliaire (11) porté par le noyau (9) de la bobine (7) de façon à rincer la partie avale dudit siège auxiliaire (6b) lors de chaque déplacement du piston (26).

5. - Robinet comportant une électrovanne selon l'une quelconque des revendications 1 à 4.

## Claims

1. A solenoid valve with controlled closure speed comprising a body (5) in which two compartments are arranged separated by a dividing wall (5c), a lower compartment (5b) and an upper compartment (5a), said upper compartment comprising a bore (7a) in which a coil (7) is situated, **characterised in that** it comprises a delay vessel (2) which is made integral with said lower compartment (5b) by any suitable means and which comprises a delay chamber (25), the periphery of which is provided with at least one groove (20) to filter a fluid which flows downstream to an auxiliary channel (6a) arranged in said dividing wall (5c), the outlet of said auxiliary channel (6a) in the upper compartment (5a) forming the auxiliary seating (6b) of said solenoid valve, the cross section of said auxiliary seating (6b) being slightly larger than that of said groove (20), said delay chamber (25) containing a piston (26) which is provided with a wiper ring (27) cooperating with said groove (20) and which carries the main flap valve (23) of said solenoid valve.

2. A solenoid valve according to claim 1, **characterised in that** the main seating (19) of said solenoid valve, arranged just above the escape channel (21) and the radial channels (22) that allow the fluid to escape, is situated inside the delay vessel (2).

3. A solenoid valve according to either claim 1 or claim 2, **characterised in that** the piston (26) comprises a guide (29) which fits in the escape channel (21).

4. A Solenoid valve according to any one of claims 1 to 3, **characterised in that** the auxiliary seating (6b) opens into a housing (6) which receives with a small amount of play the auxiliary flap valve (11) carried by the core (9) of the coil (7) so as to rinse the downstream portion of said auxiliary seating (6b) each time the piston (26) moves.

5. A tap comprising a solenoid valve according to any one of claims 1 to 4.

## Patentansprüche

1. Magnetventil mit kontrollierter Schließgeschwindigkeit, das einen Korpus (5) umfasst, in dem zwei durch eine Trennwand (5c) separierte Kammern, eine untere (5b) und eine obere (5a), angeordnet sind, wobei die obere Kammer eine Bohrung (7a) aufweist, in der sich eine Spule (7) befindet, **dadurch gekennzeichnet, dass** es einen Verzögerungstopf (2) aufweist, der durch ein beliebiges geeignetes Mittel fest mit der unteren Kammer (5b) verbunden ist und einen Verzögerungsraum (25) umfasst, dessen Umfangslinie mindestens eine Nut (20) zum Filtern einer Flüssigkeit aufweist, die danach in einen Hilfskanal (6a) abläuft, der in der Trennwand (5c) ausgespart ist, wobei die Einmündung dieses Hilfskanals (6a) in die obere Kammer (5a) den Hilfssitz (6b) des Magnetventils darstellt und der Querschnitt dieses Hilfssitzes (6b) nur unmerklich größer ist als derjenige der Nut (20), wobei dieser Verzögerungsraum (25) einen Kolben (26) umfasst, der mit einem Abstreiferring (27) ausgestattet ist, der mit der Nut (20) zusammenwirkt und die Hauptventilklappe (23) des Magnetventiles trägt.

2. Magnetventil nach Anspruch 1, **dadurch** gekenntzeichnet, dass sich in dem Verzögerungstopf (2) der Hauptsitz (19) dieses Magnetventils befindet, das genau oberhalb des Auslaufkanals (21) und der radialen Kanäle (22) angeordnet ist, über die die Flüssigkeit abfließen kann.

3. Magnetventil nach Anspruch 1 oder 2, **dadurch gekennzeichnet, dass** der Kolben (26) eine Führung (29) umfasst, die in den Auslaufkanal (21) eingreift.

4. Magnetventil nach einem beliebigen der Ansprüche 1 bis 3, **dadurch gekennzeichnet, dass** der Hilfssitz (6b) in ein Lager (6) mündet, das miL geringem Spiel die Hilfsklappe (11) aufnimmt, die vom Kern (9) der Spule (7) getragen wird, um so bei jedem Hub des Kolbens (26) den nachgeschalteten Teil dieses Hilfssitzes (6b) zu spülen.

5. Hahn mit einem Magnetventil nach einem beliebigen der Ansprüche 1 bis 4.
